**Europäisches Patentamt**

**European Patent Office**

**Office européen des brevets**

(19)

(11) Numéro de publication : **0 059 152 B2**

# (12) NOUVEAU FASCICULE DE BREVET EUROPEEN

(45) Date de publication du nouveau fascicule du brevet : **27.01.93 Bulletin 93/04**

(51) Int. Cl.[5] : **C03B 37/05, C03C 25/02**

(21) Numéro de dépôt : **82400315.6**

(22) Date de dépôt : **23.02.82**

(54) **Procédé et dispositif de formation de fibres minérales au moyen de roues de centrifugation.**

(30) Priorité : **24.02.81 FR 8103580**

(43) Date de publication de la demande :
**01.09.82 Bulletin 82/35**

(45) Mention de la délivrance du brevet :
**17.07.85 Bulletin 85/29**

(45) Mention de la décision concernant
l'opposition :
**27.01.93 Bulletin 93/04**

(84) Etats contractants désignés :
**AT BE CH DE GB IT LI LU NL SE**

(56) Documents cités :
**DE-A- 2 000 020
DE-B- 1 262 523
FR-A- 1 495 189
FR-A- 2 038 309
GB-A- 867 299
GB-A- 867 299
SE-A- 225 753
US-A- 2 944 284
US-A- 3 045 279
US-A- 3 159 475**

(56) Documents cités :
**Chemical Engineering Science, Vol. 18, 1963,
Oxford (GB), R.P. Fraser et al., "The Atomization of a Liquid Sheet by anImpinging Air
Stream", pp. 339-353
VDI Forschungsheft 574, 1976, Berlin (DE), P.
Theissing, "Erzeugung von Flüssigkeitsfilmen, Flüssigkeitslamellen und Tropfendurch
rotierende Scheiben"**

(73) Titulaire : **ISOVER SAINT-GOBAIN
Les Miroirs 18, avenue d'Alsace
F-92400 Courbevoie (FR)**

(72) Inventeur : **Debouzie, Alain
37, rue Racine
F-76500 Petite Couronne (FR)**
Inventeur : **Sainte Foi, Daniel
90, avenue Pierre Curie
F-60290 Rantigny (FR)**
Inventeur : **Blandin, Yannick
17, rue Paul Louis Giencourt - Breuil le Vert
F-60600 Clermont (FR)**

(74) Mandataire : **Le Vaguerese, Sylvain Jacques
et al
SAINT-GOBAIN RECHERCHE 39, quai Lucien
Lefranc
F-93304 Aubervilliers Cedex (FR)**

**EP 0 059 152 B2**

EP 0 059 152 B2

## Description

L'invention concerne des perfectionnements apportés aux techniques de fibrage centrifuge dans lesquelles le matériau à fibrer est conduit à l'état fondu de l'extérieur à la périphérie de roues de fibrage, est entraîné par ces roues et s'en détache sous forme de fibres sous l'effet de la force centrifuge. Ces techniques font partie de celles que l'on dit à centrifugation "libre", par opposition aux techniques dans lesquelles l'organe de centrifugation joue en plus le rôle de filière.

Dans ces techniques, on utilise en général plusieurs roues de fibrage disposées à proximité les unes des autres. Le matériau passe d'une roue à l'autre, chaque roue transformant en fibre une partie du matériau reçu, et renvoyant l'excédent sur la roue suivante.

La production de fibres par centrifugation n'est pas limitée à ces techniques. Il est également connu de conduire la matière à fibrer sur la face d'un disque ou d'une assiette en rotation, ou encore d'utiliser un tambour dont la périphérie est percée de multiples orifices formant filière et d'où la matière s'échappe sous l'effet de la force centrifuge.

Ces deux derniers types de procédés se distinguent de ceux auxquels l'invention se rattache, aussi bien par les moyens employés que par les résultats qu'ils permettent d'atteindre. Ainsi la centrifugation au moyen d'un disque ne conduit pas en pratique à des fibres suffisamment fines pour de nombreuses applications, par ailleurs, l'utilisation de certains matériaux traditionnels dans ce genre de fabrication est impossible dans un tambour formant filière en raison par exemple d'une température de traitement trop élevée ou de la présence de défauts d'homogénéité du matériau.

Vis-à-vis de ces autres techniques, celles dans lesquelles on procède au fibrage en déposant le matériau de l'extérieur sur la surface périphérique de la façon rappelée ci-dessus présentent donc certains avantages. Mais pour d'autres caractéristiques, ce type de fibrage ne donne pas entièrement satisfaction en dépit des nombreuses améliorations qui ont été proposées jusqu'à présent.

Le but de l'invention est de permettre la mise en oeuvre de ce type de fibrage dans des conditions plus satisfaisantes. En particulier l'invention se propose de donner à l'utilisateur des moyens pour mieux conduire la formation et le traitement des fibres. Un autre but de l'invention est d'accroître le rendement en fibre, c'est-à-dire la proportion du matériau récupéré sous forme de fibres par rapport à l'ensemble du matériau utilisé. On sait en effet qu'une des difficultés permanentes de ce type de technique est la présence d'une quantité relativement importante de produits infibrés. Un autre but de l'invention est d'améliorer les qualités des produits préparés, notamment les propriétés mécaniques et les propriétés isolantes. Un autre but de l'invention est de faciliter le fonctionnement continu des installations en réduisant la fréquence et la durée des arrêts occasionnés par les remises en état périodiques.

En raison des très nombreux facteurs entrant en jeu dans les mécanismes conduisant à la formation de la fibres puis à celle du produit final, ces techniques se prêtent difficilement à une analyse systématique. Ceci explique en partie la diversité des solutions antérieures proposées pour parvenir à ce genre d'améliorations.

Les premières études de ces systèmes se sont efforcées de déterminer les meilleures conditions de centrifugation : mode d'introduction du matériau à fibrer, forme de la surface des roues, vitesse de rotation, dimensions, position relative et nombre des roues, etc...

Ultérieurement, l'accent a été mis sur les conditions dans lesquelles les fibres, se détachant des roues de fibrage, sont traitées et transportées jusqu'à l'endroit où elles sont collectées.

Ainsi il a été envisagé de soumettre les fibres au moment de leur formation à un courant gazeux qui les entraîne et les sépare des particules infibrées.

Pour améliorer ces techniques, diverses propositions ont été également faites en ce qui concerne le traitement des fibres pour leur utilisation sous forme de matelas isolants. De façon générale, pour ces utilisations, les fibres sont enduites par pulvérisation d'une composition liquide de liants, destinés après séchage et/ou traitement thermique à conférer sa cohésion et ses propriétés mécaniques au produit final.

Ce traitement pour être satisfaisant ne doit bien évidemment pas perturber l'opération de fibrage proprement dite. Il doit également conduire à une enduction des fibres aussi homogène que possible.

Dans un mode de réalisation traditionnel, la pulvérisation est effectuée sur le trajet du courant gazeux portant les fibres vers la surface collectrice, ceci à distance des roues de fibrage. Cette façon de faire ne permet pas d'obtenir une bonne homogénéité de l'enduction. La raison exacte n'en est pas connue mais on peut remarquer que l'écoulement du courant gazeux conduit les fibres de façon très irrégulière devant l'organe de pulvérisation. Par ailleurs, il est d'autant plus difficile d'enduire correctement toutes les fibres que celles-ci ont tendance à se rassembler en paquets ou mèches, au cours de leur progression vers l'organe collecteur.

Pour tenter d'améliorer cette enduction, il a été proposé de projeter la composition pulvérisée sur le trajet des fibres au-delà des roues de fibrage avec la même vitesse et dans la même direction que celles du courant gazeux portant les fibres. Il a été aussi proposé dans la demande FR-A-1 495 189 de pulvériser la composition

2

à partir d'un orifice situé sur un embout fixé à la roue dans l'axe de celle-ci. Il ne semble pas que ces mesures aient permis d'améliorer les résultats de façon pleinement satisfaisante.

Pour éviter les difficultés précédentes, il a été proposé, et ceci constitue également un mode traditionnel, de pulvériser la composition de traitement au voisinage des roues de fibrage, éventuellement dans le courant gazeux et destiné à entraîner les fibres et les séparer des particules infibrées. Dans ce dernier cas la pulvérisation est faite dans ces gaz avant qu'ils n'entrent au contact avec les fibres.

En opérant de cette façon, les fibres sont mises au contact de la composition de traitement dès leur formation, dans des conditions mieux contrôlées. Néanmoins, ce mode d'enduction comporte certains inconvénients.

Un de ceux-ci provient de la présence des organes de pulvérisation à proximité de la surface de la roue. Dans cette position, ces organes sont exposés à la chaleur rayonnant depuis la surface portée à haute température par le contact avec le matériau fondu. Ils sont aussi exposés aux projections accidentelles de matériau fondu. Mais surtout ces organes de pulvérisation ont tendance à retenir les fibres échappées du courant qui les conduit vers la surface de réception. Ces fibres enduites de composition habituellement sensible à la chaleur subissent une "cuisson". Il se forme ainsi sur l'organe de pulvérisation des dépôts aboutissant rapidement à l'obstruction de cet organe.

Pour minimiser ces inconvénients, on peut utiliser des buses dont les orifices sont relativement grands, ce qui pour un débit donné conduit à réduire le nombre de buses. En définitive ces buses, moins nombreuses, sont plus espacées les unes des autres et il en résulte une moins bonne homogénéité du traitement, préjudiciable à la qualité du produit final.

Par ailleurs, quelles que soient les précautions prises, on n'évite pas complètement l'encrassage progressif qui conduit au bouchage des buses de pulvérisation, et les interventions pour remise en état occasionnent des arrêts de production relativement fréquents.

Dans les dispositifs comportant plusieurs roues de fibrage, il apparaît préférable du point de vue de la circulation de la matière d'une roue à l'autre, d'éviter le soufflage et/ou la pulvérisation entre les roues, en particulier pour ne pas refroidir le matériau non encore fibré. On s'efforce en général de faire en sorte que les fibres se forment en dehors de ces zones comprises entre les roues. Cependant, une certaine quantité de fibres, qu'elle se forme ou soit entraînée, passe dans ces zones et n'est pas directement touchée par la composition pulvérisée ce qui accroît le risque de défaut d'homogénéité.

L'amélioration de l'enduction des fibres, en présence ou non de mèches, et par suite l'amélioration des qualités du produit final sont parmi les avantages procurés par l'invention. L'invention concerne un procédé de fabrication d'un matelas de fibres minérales (voir FR-A-1 495 189) dans lequel le matériau destiné à former les fibres est conduit à l'état étirable sur un dispositif de centrifugation comprenant plusieurs roues en rotation rapide, le matériau sous forme d'un filet volumineux s'écoulant vers la surface périphérique d'une première roue où il est essentiellement accéléré et renvoyé sur une deuxième roue tournant en sens inverse de la première, une partie au moins du matériau adhérant à la surface de ladite seconde roue puis s'en détachant sous l'effet de la force centrifuge en formant des fibres, l'excédent éventuel de matériau n'adhérant pas à la roue étant renvoyé sur une éventuelle troisième roue tournant en sens inverse de la seconde et ainsi de suite, un courant gazeux longeant la périphérie des roues et dirigé transversalement à la trajectoire des fibres et entraînant celles-ci vers un organe de réception, une composition liquide de liant étant appliquée sur les fibres au cours de leur trajet avant qu'elles ne soient recueillies sur l'organe de réception, composition qui provient d'un organe rotatif, dans lequel le courant gazeux présente au niveau des roues de centrifugation une vitesse comprise entre 50 et 180 m/s et la composition liquide est projetée par centrifugation sous forme de gouttes, de dimensions moyennes de l'ordre de 250 micromètres, transversalement au courant gazeux portant les fibres, au voisinage immédiat des roues, dans un plan normal à l'axe des roues en une distribution circonférentielle, la projection de la composition liquide étant réalisée à une distance de l'axe de la roue qui est supérieure à 70 % du rayon de la roue et inférieure à ce rayon.

Dans le procédé selon l'invention, la composition liquide est projetée sous forme de gouttelettes dans le courant gazeux portant les fibres, transversalement à celui-ci, par centrifugation depuis la zone située à l'intérieur de la nappe de fibres et à proximité immédiate de la roue de fibrage, et les gouttelettes entrant dans le courant gazeux sont finement divisées par celui-ci.

Selon l'invention, l'énergie qu'il faut communiquer à la composition liquide provient essentiellement de la rotation d'un organe mécanique sur ou dans lequel elle est conduite, qui l'entraîne et dont elle s'échappe sous l'effet de la force centrifuge. C'est dans ce sens qu'il s'agit d'une projection par centrifugation. L'énergie des gouttelettes doit être suffisante pour leur permettre d'atteindre ce courant et d'y pénétrer.

La zone située à l'intérieur de la nappe de fibres est celle qui se trouve en aval de la roue de fibrage (dans le sens du courant entraînant les fibres), et est au moins partiellement enveloppée par cette nappe. Il faut remarquer que selon l'invention, la projection n'étant pas limitée à un secteur particulier de la roue, toutes les fibres, même celles qui se présenteraient entre les roues, seraient soumises au traitement.

La nappe de fibre et le courant gazeux qui la porte sont habituellement orientés suivant une direction peu inclinée par rapport à l'axe de rotation de la roue, notamment pour permettre une évacuation commode des fibres. De préférence la direction du courant gazeux est parallèle à l'axe de la roue.

Pour des raisons de simplicité d'exécution, la centrifugation de la composition liquide est avantageusement réalisée à partir d'un organe coaxial à la roue. Les gouttelettes de composition sont donc projetées suivant une direction sensiblement normale à l'axe de rotation et au courant gazeux portant les fibres.

La projection de la composition de traitement est avantageusement effectuée aussi près que possible de la roue de fibrage.

Dans la pratique la projection de la composition de traitement est réalisée suffisamment près de la roue de fibrage pour que les gouttelettes rencontrent le courant gazeux portant les fibres en un point où son écoulement n'est pas encore perturbé par le mélange avec l'air induit. Bien entendu, le désordre dans l'écoulement occasionné par ce mélange va en s'accroissant au fur et à mesure que l'on s'éloigne de la roue. Il n'y a pas à proprement parler de limite stricte, mais plus la projection de composition est opérée près de la roue, d'une part plus intense est l'action du courant gazeux sur les gouttes de composition, et d'autre part meilleure est l'homogénéité de la distribution des particules de composition au sein du courant gazeux portant les fibres (notamment en raison de ce que les dimensions utiles du courant, à ce point de sa progression, sont relativement limitées).

Dans des modes de réalisation avantageux, la distance séparant le bord aval de la roue de centrifugation du plan dans lequel la projection de la composition de traitement est réalisée ne dépasse pas 150 mm et, de préférence est inférieure à 60 mm.

Si cela apparaît nécessaire compte tenu de l'appareillage et/ou des conditions opératoires, un minimum de distance entre le bord aval de la roue et l'organe de projection peut être maintenu pour éviter, par exemple, que les transferts de chaleur ne perturbent le fonctionnement de l'organe de projection de la composition de traitement.

L'organe de centrifugation libère la composition de traitement à une distance de l'axe de rotation telle que les gouttes qui s'échappent aient acquis, une énergie suffisante pour atteindre le courant gazeux portant les fibres. Plus petite est la distance séparant le point où les gouttes se détachent de l'organe de projection du courant gazeux, plus l'énergie conférée est grande. En outre, la localisation du point de rencontre des gouttes avec le courant gazeux est d'autant mieux assurée que la distance parcourue par les gouttes sans le support de cet organe de projection est plus courte. S'il parait donc avantageux de réduire cette distance, il faut néanmoins ménager un certain espace entre le courant gazeux et l'extrémité de l'organe de projection pour éviter de perturber la trajectoire des fibres ou pour éviter de soumettre cet organe aux particules de matériau fondu qui, débordant la surface de la roue, viendraient le frapper accidentellement.

La vitesse radiale à communiquer à la composition, à la périphérie de l'organe de projection, peut varier en fonction de nombreux facteurs : dimension des gouttes, distance du courant gazeux, vitesse du courant gazeux. Compte tenu des paramètres de dimension de l'appareillage dont il est donné des exemples dans la suite de la description et également des caractéristiques du courant gazeux, des vitesses avantageuses se situent entre 50 et 120 m/s et de préférence entre 70 et 100 m/s.

Un avantage lié au fait que la composition est projetée par centrifugation est d'éviter de perturber l'écoulement normal du courant gazeux portant les fibres par un jet gazeux en aval de la roue de fibrage comme c'est le cas lorsque l'on pulvérise au moyen d'un fluide propulseur. L'impact des gouttes de composition sur l'écoulement du courant gazeux est sensiblement moindre que celui du jet de pulvérisation. On réduit ainsi le risque d'apparition de tourbillons et les inconvénients que l'on a dit, notamment en ce qui concerne l'enduction des mèches de fibres.

Dans ce qui précède on a indiqué que la projection se faisait par centrifugation. Il va de soi que si la centrifugation est le moyen principal, il peut être associé à d'autres moyens. Ainsi, normalement la composition de traitement est envoyée à l'organe de projection sous une pression qui ne dépasse pas celle permettant sa progression jusqu'à cet organe. Il est possible néanmoins d'envoyer la composition sous une pression plus forte. On peut aussi le cas échéant associer l'utilisation de l'organe de centrifugation à celle d'un fluide propulseur dans la mesure où ce dernier ne perturbe pas la formation ou le transport des fibres, ou encore la constitution du produit final.

Il est remarquable de constater que selon l'invention, contrairement à ce qui avait été envisagé antérieurement, il n'est pas nécessaire d'opérer une dispersion très fine de la composition de traitement au niveau de l'organe de projection pour avoir une bonne enduction des fibres. Pour faciliter la projection et la pénétration des gouttes dans le courant gazeux, il peut même être préférable que ces gouttes soient de dimensions relativement importantes. Ceci est rendu possible par le fait que la dispersion de ces gouttes s'achève dans et sous l'action du courant gazeux.

En effet, l'introduction de la composition dans le courant gazeux, à proximité de la roue de fibrage, c'est-à-dire en un point où le courant gazeux présente un maximum de vitesse et d'énergie favorise l'éclatement des gouttes et d'autant plus qu'elles sont plus volumineuses.

L'éclatement des gouttes de composition dans le courant gazeux portant les fibres est une caractéristique particulièrement avantageuse de l'invention. On obtient de cette façon une composition aussi finement divisée qu'au moyen d'une pulvérisation sans en avoir les inconvénients indiqués précédemment, à savoir, soit la difficulté de faire pénétrer l'aérosol dans le courant gazeux à grande vitesse, soit la présence de buses de pulvérisation dans une position préjudiciable à leur bon fonctionnement. En effet d'une part les gouttes centrifugées pénètrent plus aisément dans le courant gazeux qu'un aérosol, et d'autre part, en raison même de son mode de fonctionnement, l'organe de centrifugation présente un caractère que l'on qualifier d'"auto-décrassant" (ceci notamment dans le cas où la composition projetée assure un refroidissement de l'organe de projection et évite ainsi le collage des fibres).

Un autre avantage de la modification des gouttes dans le courant est lié à la façon dont s'effectue cette modification. L'étude du comportement d'une goutte projetée dans un courant gazeux intense montre que l'éclatement en multiples particules est l'aboutissement d'une série de déformations au cours desquelles la goutte "déformée" voit ses dimensions considérablement accrues. Ces déformations peuvent prendre plusieurs formes et notamment celle d'une bulle de grande dimension. Ce processus de déformation non seulement prépare l'éclatement mais, en outre, compte tenu de l'accroissement des dimensions, augmente la probabilité de rencontre avec les fibres.

De façon générale, quels que soient les phénomènes auxquels sont soumises les gouttes, il en résulte une bonne homogénéité de leur dispersion dans le courant gazeux et par suite une bonne répartition de la composition sur le produit récupéré sur la surface collectrice.

Dans la pratique, beaucoup des paramètres qui déterminent les conditions dans lesquelles les gouttes sont projetées, entrent dans le courant gazeux, et sont divisées, sont fixés en fonction des conditions de fibrage. C'est le cas notamment de la vitesse de rotation de la roue lorsque l'organe de projection est solidaire de celle-ci. C'est le cas aussi dans une certaine mesure des caractéristiques du courant gazeux. L'expérimentateur dispose néanmoins de certains moyens pour intervenir de façon spécifique sur la détermination des caractéristiques des gouttes de composition. Il s'agit essentiellement de la position de l'organe de projection, de sa géométrie et notamment de la distance à l'axe de rotation du point d'où s'échappent les gouttes. Il est aussi possible de modifier les orifices de l'organe de projection ou le cheminement de la composition dans cet organe.

Dans les conditions préférées de vitesse de rotation et de soufflage qui sont données à titre d'exemple dans la description, on peut être conduit à projeter des gouttes dont les dimensions moyennes sont plus de 10 fois celles des aérosols traditionnellement utilisés et reconnus pour permettre une bonne distribution. A titre indicatif, dans une composition aqueuse de liant pulvérisée de façon traditionnelle sur des fibres minérales, 90 % des gouttelettes ont une dimension moyenne de l'ordre de 30 μm. Lorsque selon l'invention la composition est projetée par centrifugation les gouttes formées de façon typique ont des dimensions comprises entre 40 et 500 μm, et une dimension moyenne de l'ordre de 250 μm.

Suivant une autre particularité de l'invention, il est apparu avantageux de faire en sorte que le courant gazeux ait une vitesse élevée dans la zone où il rencontre la composition projetée.

Comme indiqué ci-dessus, l'utilisation d'un courant gazeux rapide est favorable à la dispersion de la composition de traitement en facilitant l'éclatement des gouttes.

Par ailleurs, le choix d'un courant gazeux à vitesse élevée pourrait avoir une influence favorable sur le taux de fibrage et même sur les qualités du produit final.

Les raisons précises de ces améliorations ne sont pas parfaitement élucidées, en ce qui concerne l'amélioration du taux de fibrage, on peut penser qu'une certaine quantité de particules infibrées, ou insuffisamment fibrées, est étirée de façon complémentaire en pénétrant dans le courant gazeux, et d'autant mieux qu'il est plus rapide.

Pour le produit final on peut avancer l'hypothèse suivante.

En formant dans la zone de fibrage et d'enduction un courant gazeux rapide, on crée dans cette zone un écoulement qui entraîne les fibres en les maintenant dispersées. Les mouvements tourbillonnaires engendrés par le mélange du courant gazeux avec l'air ambiant induit, et que l'on suppose favoriser le développement des mèches, sont repoussés à distance de la roue de fibrage. La dispersion des gouttes et leur éclatement se développent dans un temps où les fibres sont bien individualisées. Dans le courant gazeux, le mélange particules de composition et fibres est par suite bien homogène, même s'il se forme des mèches dans la progression ultérieure vers la surface de réception. En outre, en rejetant vers la surface de réception les phénomènes développant les mèches, on réduit le temps pendant lequel ce développement peut se produire et ainsi le nombre et la dimension des mèches.

Quel que soit le phénomène qui conduit à cette amélioration, il est certain que les conditions de soufflage de ce courant gazeux sont différentes de celles qui étaient réalisées antérieurement dans ces techniques de fibrage par centrifugation à partir de la surface périphérique d'une roue.

Dans ces techniques antérieures, le but du soufflage est essentiellement, comme on l'a indiqué, d'emporter les fibres vers la surface de réception et éventuellement d'opérer une séparation des infibrés, ce qui, dans les deux cas, peut être obtenu à des vitesses relativement faibles. L'opération de soufflage selon l'invention semble par contre intervenir sur les conditions dans lesquelles se forment les fibres. Contrairement à ce que l'on pouvait craindre antérieurement, l'accroissement de la vitesse des gaz de soufflage, dans les limites indiquées ci-après, ne perturbe pas la formation de la fibre et améliore la qualité du produit final.

Dans la pratique, le courant gazeux est établi au voisinage de la surface de la roue, mais pas directement au contact de celle-ci. Il est nécessaire pour le bon fonctionnement du système que, dans un premier temps, les fibres prennent naissance et se développent sous l'effet de la centrifugation. Un courant longeant la surface, surtout s'il est rapide, pourrait pulvériser le matériau déposé à la surface de la roue sans permettre la formation de fibres. En sens inverse, le courant gazeux, pour jouer son rôle, ne doit pas être trop éloigné de la surface de la roue. En effet, quelle que soit la vitesse initiale d'éjection de la matière formant les fibres, ces dernières, en raison de leur finesse, sont très vite ralenties, pour que les fibres soient projetées dans le courant gazeux, la distance qui sépare ce dernier de la surface est donc, nécessairement limitée.

Avantageusement, cette distance est de l'ordre de 10 à 200 mm et de préférence de 25 à 100 mm.

Le courant gazeux est établi autour de la roue de centrifugation au moins dans le secteur de celle-ci d'où s'échappent les fibres.

Lorsque l'on dispose d'un ensemble comprenant plusieurs roues de fibrage ce qui constitue le cas le plus usuel, le courant gazeux est avantageusement établi sur le pourtour des roues dans les secteurs où les roues ne se font pas face, le courant gazeux dans ces conditions forme une sorte d'enveloppe pour l'ensemble des roues.

Le courant gazeux disposé comme on vient de l'indiquer dans la zone où il rencontre les fibres doit avoir en outre une vitesse suffisante pour que les effets favorables énoncés plus haut soient obtenus. Bien entendu, cette vitesse ne doit pas être telle qu'elle aboutisse à la destruction des fibres. Si, dans une certaine mesure, des fibres plus courtes ne constituent pas un désavantage et même peuvent contribuer à la réduction du nombre et/ou de l'importance des mèches, ces fibres doivent néanmoins avoir une longueur suffisante pour pouvoir constituer la texture du matelas isolant. Selon l'invention, la vitesse des gaz dans la zone en question se situe entre 50 et 180 m/s et de préférence entre 100 et 150 m/s.

La vitesse du courant gazeux peut faire l'objet d'une comparaison avec celle qui est communiquée au matériau par les roues de centrifugation, pour ces dernières, les vitesses préférées dépendent de nombreux facteurs, en particulier de la nature du matériau à traiter, de sa viscosité, de la surface de la roue, etc... Pour le traitement des matériaux du type laitier de fonderie, basalte, diabase, verres ou des matériaux analogues utilisés pour la formation de fibres minérales, des vitesses périphériques préférées des roues de fibrage soient de l'ordre de 60 à 150 m/s. Dans ces conditions, le rapport de la vitesse du courant gazeux à la vitesse périphérique de rotation est avantageusement compris entre 1,8 et 0,8 et plus particulièrement entre 1,5 et 1.

La vitesse du courant gazeux est rapprochée de celle de la roue de fibrage car il est apparu que ces deux facteurs dans une certaine mesure étaient dépendants l'un de l'autre dans l'établissement des conditions opératoires. On a vu que, globalement, l'accroissement de la vitesse des gaz pouvait conduire à une diminution du taux d'infibrés et à un étirage complémentaire des fibres. Autrement dit l'accroissement de la vitesse du gaz conduit dans l'ensemble à des fibres plus fines.

Pour certaines utilisations, il peut ne pas être souhaitable d'avoir des fibres trop fines, par exemple pour des raisons de tenue de résistance à la température. Pour garder les avantages du soufflage à grande vitesse sans pour autant réduire le diamètre des fibres, on peut alors réduire la vitesse de la roue de fibrage.

L'utilisateur dispose ainsi d'un moyen supplémentaire de réglage des conditions de fibrage par l'ajustement de la combinaison vitesse des gaz-vitesse de la roue aux valeurs conduisant aux meilleurs résultats. Cette possibilité supplémentaire est très appréciable, par exemple pour fixer au mieux la localisation de la zone de la roue d'où les fibres se détachent.

La quantité de gaz soufflé doit être suffisante pour assurer une vitesse pratiquement uniforme sur toute la largeur de la surface de la roue. Cette quantité doit également être suffisante pour dévier et entraîner le matériau constituant les fibres de même que la composition de traitement. Avantageusement, pour la vapeur d'eau, la quantité soufflée est comprise entre 0,5 et 2 kg par kg de matériau fibré. Compte tenu de la géométrie de l'ensemble, comme on peut le constater, le courant gazeux enveloppant les roues peut présenter une épaisseur relativement limitée. Un courant plus volumineux serait également utilisable mais il en résulterait une consommation de gaz accrue sans amélioration supplémentaire sensible de la qualité des produits obtenus.

Si le gaz soufflé sur le pourtour des roues dans les zones où se détachent les fibres, la quantité de gaz soufflé peut avantageusement être réglée en fonction de la quantité de fibres qui se détache dans la zone considérée. Il va de soi que dans une zone donnée l'énergie et donc la quantité de gaz nécessaire sont d'autant plus importantes que les fibres sont plus abondantes.

Les jets gazeux de faibles dimensions perdent rapidement de la vitesse au contact de l'air ambiant. Aussi lorsque l'on utilise de tels jets pour former le courant gazeux selon l'invention, est-il préférable de disposer le ou les orifices d'émission à proximité de la roue. Autrement dit la distance du ou des orifices d'émission au plant du bord amont de la surface de la roue de fibrage est avantageusement aussi petite que les impératifs de construction le permettent. En rapprochant ces orifices de la surface de la roue, on s'assure que la vitesse du courant au niveau de la roue est peu différente de ce qu'elle est au point d'émission. On dispose aussi de cette façon, au voisinage de la roue de fibrage, d'un courant dont la géométrie est relativement bien définie.

La distance entre le ou les orifices d'émission et le plan du bord amont de la surface de la roue est avantageusement inférieure à 50 mm.

Les orifices d'émission peuvent se trouver au niveau de la surface de la roue ou même s'avancer un peu sur celle-ci sans pour autant se trouver sur le trajet des fibres. En effet avant même d'être entraînées dans le courant gazeux provenant de l'organe de soufflage, les fibres sont déviées par les courants induits.

Lorsque l'on utilise des jets de petites dimensions, c'est-à-dire des jets engendrés à partir d'orifices dont la largeur ne dépasse pas 6 mm et de préférence est comprise entre 0,5 et 4 mm, et dans les conditions de distance entre ces orifices et la surface de la roue indiquée ci-dessus, la pression nécessaire pour conférer au courant gazeux les vitesses adéquates se situe ordinairement entre 1 et $10 \times 10^5$ Pa.

Il est également possible d'effectuer plusieurs opérations de traitement des fibres au moyen de compositions liquides, l'une au moins de ces opérations étant réalisée suivant les modalités décrites précédemment.

Ces opérations peuvent être successives ou simultanées et mettre en oeuvre des compositions identiques ou différentes. Ainsi dans la formation de matelas isolants en matériaux minéraux on peut, par exemple, traiter les fibres au moyen de deux compositions qui par réaction forment un liant ou encore projeter séparément une composition de liant et une composition tensio-active, etc...

Pour des raisons de commodité de mise en oeuvre du dispositif, il est préférable de faire en sorte que l'organe de projection soit rendu solidaire de la roue et entraîné en rotation par celle-ci.

Avantageusement, l'organe de projection présente une symétrie de révolution et l'axe de révolution se confond avec celui de la roue de fibrage. De préférence, cet organe a la forme générale d'un disque.

Dans un mode de réalisation particulièrement préféré, l'organe de projection, ayant la forme générale d'un disque, est constitué par deux flasques accolés définissant entre eux un compartiment dans lequel la composition à projeter est acheminée. Ce compartiment est en communication d'une part avec un conduit d'alimentation en composition et, d'autre part avec un ou plusieurs orifices disposés à la périphérie ou au voisinage de la périphérie du disque. L'orifice peut en particulier être constitué par une fente circulaire. Lorsque la composition s'échappe par plusieurs orifices distincts, la répartition et le nombre de ceux-ci sont tels que la projection s'effectue de manière pratiquement homogène en tout point à la périphérie du disque. Il peut s'agir dans ce cas notamment d'orifices disposés en cercle et suffisamment rapprochés les uns des autres. Le cas échéant ces orifices peuvent être disposés en plusieurs rangées concentriques.

Avantageusement, les orifices sont disposés non pas à la périphérie dans une direction radiale, mais sur une face de l'organe de projection, sensiblement normale à l'axe de rotation et à une certaine distance de la périphérie. De cette façon les projections accidentelles de matériau ne peuvent frapper ces orifices.

Quand les orifices ne sont pas à la périphérie, de façon générale, la composition qui s'échappe sous l'effet de la force centrifuge longe la face correspondante de l'organe de projection jusqu'à la périphérie. Pour améliorer l'entraînement de la composition sur ce trajet relativement court, il est possible de donner à la partie concernée de la face un relief particulier. Ainsi il peut être avantageux de disposer des rainures ou des stries radiales.

Pour éviter les transferts de chaleur entre la roue de fibrage et l'organe de projection lorsque ceux-ci sont rendus solidaires, il est préférable de faire en sorte que la fixation soit réalisée au voisinage du moyeu, c'est-à-dire dans une région peu exposée à la chaleur et de prévoir un certain espacement entre le flasque de la roue et l'organe de projection. Etant donné qu'il s'agit de prévenir les transferts de chaleur par contact, cet espacement peut être de petite dimension ; ceci permet de ne pas contrarier les conditions de distance dans lesquelles les gouttes doivent être projetées par rapport au bord de la surface périphérique de la roue. En pratique un espacement de quelques millimètres peut être suffisant. Cet espacement est d'autant moins gênant que, par leur forme, les flasques de la roue peuvent se trouver en retrait par rapport à la surface de travail de la roue. Autrement dit, la surface de travail de la roue peut déborder en porte-à-faux au-dessus des flasques et même éventuellement sur une partie de l'organe de projection.

D'autres moyens de protection de l'organe de projection sont également utilisables. On peut notamment disposer sur le flasque de la roue une collerette protectrice circulaire couvrant une partie de la périphérie de cet organe de projection. Cette collerette peut faire partie intégrante du flasque de la roue. Il peut aussi s'agir d'un élément distinct fixé sur le flasque.

Dans tous les cas, comme indiqué précédemment, les dimensions radiales de l'organe de projection sont telles que la libération de la composition se produise à une distance de l'axe de rotation qui corresponde au moins à 70 % du  rayon de la roue de fibrage.

L'acheminement de la composition de traitement jusqu'à l'organe de projection est avantageusement effectué au moyen d'une canalisation disposée dans l'arbre de la roue et de préférence coaxialement.

Dans les dispositifs destinés à fibrer des matériaux à température élevée, des moyens sont généralement mis en oeuvre pour éviter la déformation et l'usure rapide des pièces soumises aux contraintes les plus sévères. Ainsi il est connu de refroidir la surface de fibrage des roues, en amenant de l'eau sur la face interne de la surface de fibrage. Lorsqu'une telle disposition est utilisée il est avantageux de conduire l'eau de refroidissement par une canalisation située également dans l'arbre de la roue et enveloppant la canalisation en composition de traitement. On protège ainsi la composition contre une élévation de température indésirable.

Comme indiqué précédemment, les organes de projection comprenant un compartiment dans lequel la composition à projeter est confinée sur une partie du trajet correspondant à son accélération sous l'effet de la centrifugation, constituent des modes de réalisation préférés.

D'autres modes de réalisation de l'organe de projection sont également possibles. Suivant l'un de ces modes, l'organe de projection peut en particulier comprendre une surface en rotation sur laquelle la composition est déposée. Il faut, bien entendu, que la composition déposée sur cette surface soit entraînée et, par suite, bien accélérée. Ceci peut être obtenu de diverses manières.

Si l'on utilise par exemple un disque dont la surface est normale à l'axe de rotation, on peut prévoir sur cette surface des rainures ou des stries radiales pour éviter le glissement de la composition. On peut également déposer la composition sur la surface d'un organe présentant une concavité, de façon que la force centrifuge maintienne la composition plaquée contre cette surface. Une telle surface peut présenter par exemple une forme conique ou une forme analogue.

Dans ce qui précède, l'organe de projection envisagé est distinct de la roue de fibrage. Dans un autre mode de réalisation, l'organe de projection, au moins pour certains éléments qui le constituent, fait partie de la roue de fibrage. En particulier le flasque aval de la roue peut faire partie de l'organe de projection. Notamment, on peut associer à ce flasque de la roue un flasque additionnel, l'ensemble étant analogue au disque décrit précédemment.

Le dispositif comprend aussi un organe engendrant un courant gazeux. Le ou les orifices de cet organe sont situés à proximité de la surface périphérique de la roue. Dans la direction radiale les orifices sont à distance suffisante pour que le courant gazeux, dirigé essentiellement dans la direction de l'axe de la roue, ne balaie pas la surface périphérique comme indiqué précédemment. De préférence la distance dans la direction radiale séparant la surface de la roue de l'axe des orifices est de l'ordre de 25 à 100 mm. Dans la direction axiale les orifices sont aussi près que possible du bord de la roue et de préférence à moins de 10 mm.

Le ou les orifices engendrent un courant gazeux qui enveloppe toutes les zones du pourtour de la roue d'où les fibres se détachent et, avantageusement, toutes les zones du pourtour de la roue de fibrage qui ne font pas face à une autre roue sauf le cas échéant dans l'espace situé entre deux roues tournant dans le même sens.

Lorsque plusieurs roues de fibrage sont utilisées conjointement dans le même dispositif, un seul organe peut engendrer le courant gazeux correspondant à chacune d'elles. A l'inverse plusieurs organes distincts peuvent être utilisés pour les différentes roues de fibrage ou même sur une seule roue, chacun engendrant une fraction du courant.

Les dispositifs comportant plusieurs roues de fibrage ont généralement aussi une première roue dont le rôle est d'accélérer et de distribuer le matériau sur la roue de fibrage suivante. Cette roue de distribution ne produit pratiquement pas de fibre et il n'est normalement pas nécessaire de lui associer un organe de soufflage. Bien entendu, si la première roue du dispositif effectue un certain fibrage, il est préférable de lui associer un organe de soufflage.

Que l'orifice soit constitué par une fente ou par une rangée d'orifices séparés, le courant gazeux lorsqu'il rencontre les fibres doit se présenter comme une nappe pratiquement continue. Si les orifices sont multiples, ils doivent être suffisamment rapprochés pour que les jets adjacents se rejoignent.

Ordinairement une seule rangée d'orifices est utilisée, mais si cela apparaît nécessaire soit pour élargir le courant gazeux soit pour assurer une vitesse plus constante sur toute la largeur de la surface de la roue de fibrage, il est également possible de mettre en oeuvre plusieurs rangées d'orifices présentant entre elles des caractéristiques semblables ou différentes. En particulier lorsque plusieurs rangées sont utilisées, peuvent varier : les dimensions des orifices, leur inclinaison par rapport à l'axe de la roue ou leur position relative par rapport à la roue.

Comme il a été dit plus haut, le courant gazeux peut être d'importance variable selon la zone correspondante du pourtour de la roue. Il est avantageux de faire en sorte que la quantité de gaz soit en fonction de l'abondance des fibres.

Le nombre ou la dimension des orifices peut être avantageusement choisi en fonction de la zone à laquelle correspondent ces orifices. Dans les zones où se détache une grande quantité de fibres, il est préférable d'avoir des orifices plus grands ou en plus grand nombre.

Une chambre alimente les orifices. Cette chambre est avantageusement de forme annulaire. Elle reçoit par des moyens traditionnels les gaz sous pression utilisés : air, vapeur d'eau, gaz de combustion.

Les autres moyens constituant le dispositif de fibrage sont des moyens analogues à des moyens décrits dans la littérature antérieure. Il en est ainsi pour tout ce qui concerne les roues de fibrage elles-mêmes ou les moyens d'entraînement. Sont aussi analogues à ce qui apparaît dans la littérature les moyens d'alimentation en matériau à fibrer et les organes de réception des fibres formées.

De même, sauf indication contraire, dans la suite de la description, les grandeurs caractéristiques pour la mise en oeuvre des procédés selon l'invention, notamment la température et le débit des matériaux, sont analogues aux grandeurs correspondantes mentionnées dans la littérature antérieure pour ces techniques.

La description des figures annexes ainsi que les exemples de mise en oeuvre de modes de réalisation particuliers illustrent de façon plus détaillée le procédé faisant l'objet de l'invention.

La figure 1 représente de façon schématique un dispositif de fibrage type utilisé selon l'invention, en perspective.

La figure 2 est une vue schématique de profil en coupe partielle d'une roue de fibrage pour la mise en oeuvre de l'invention.

La figure 3 est une vue partielle à plus grande échelle du dispositif représenté à la figure 2.

La figure 4 est une autre vue partielle à plus grande échelle du dispositif de la figure 2.

La figure 5 représente schématiquement les principaux éléments du dispositif avec indication des mesures fixant la position relative de ces éléments entre eux.

La figure 6 est une vue en coupe d'un détail du circuit d'amenée de l'eau de refroidissement.

La figure 7 est une vue en coupe montrant le détail du circuit conduisant la composition de traitement et l'organe de projection de cette composition.

La figure 8 présente en coupe partielle un autre type d'organe de projection de la composition de traitement.

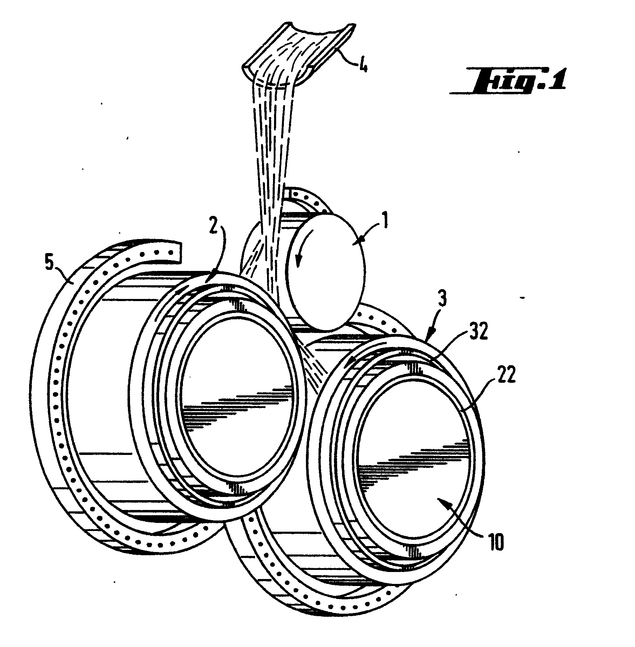

Le dispositif type représenté à la figure 1 comprend trois roues. Les roues 2 et 3 sont les roues de fibrage. La roue 1 est une roue de distribution. Dans ce dispositif la matière à fibrer s'écoule à partir d'une goulotte 4 sur la roue de distribution 1. Au contact de cette roue, elle est accélérée et renvoyée sur la roue 2 tournant en sens inverse de la roue de distribution. De la roue 2, la matière qui n'adhère pas suffisamment est projetée sur la roue 3. La matière adhérant à la roue est encore accélérée jusqu'à ce que, sous l'effet de la force centrifuge, elle se détache et forme des filaments qui sont projetés dans un courant gazeux entourant la roue et qui les entraîne vers l'organe de réception, non représenté. Le courant gazeux est engendré à partir des orifices disposés sur la couronne 5 de soufflage. Cette couronne ne produit le courant gazeux que dans les zones où les fibres se détachent des roues de fibrage.

Si le dispositif de la figure 1 comprend trois roues, on trouve également couramment des dispositifs à 4 roues ou à 2 roues fonctionnant suivant le même principe.

Sur cette figure, l'organe de projection de la composition de traitement entouré d'une collerette 32 est schématisé en 10. La composition de traitement s'échappe par la fente 22 disposée sur la face de cet organe.

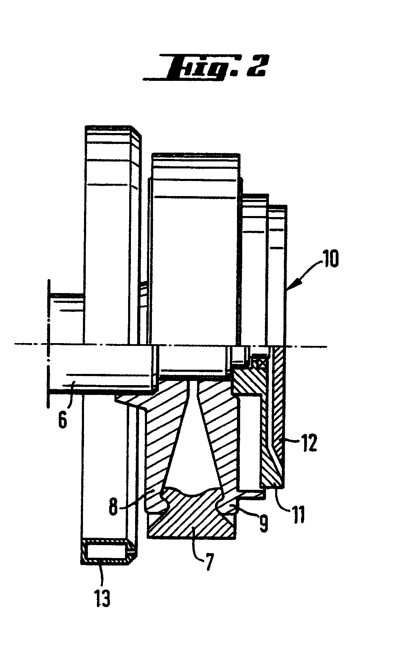

A la figure 2 sont représentés les éléments du dispositif intervenant directement dans le processus de fibrage : la roue elle-même formée par la jante 7 supportée par deux flasques 8 et 9 et portée par l'arbre 6, l'organe de projection 10 de la composition de traitement des fibres, constitué également par deux flasques 11 et 12. A ces éléments mobiles il faut ajouter l'organe de soufflage 13 qui est fixe et généralement solidaire du bâti, non représenté.

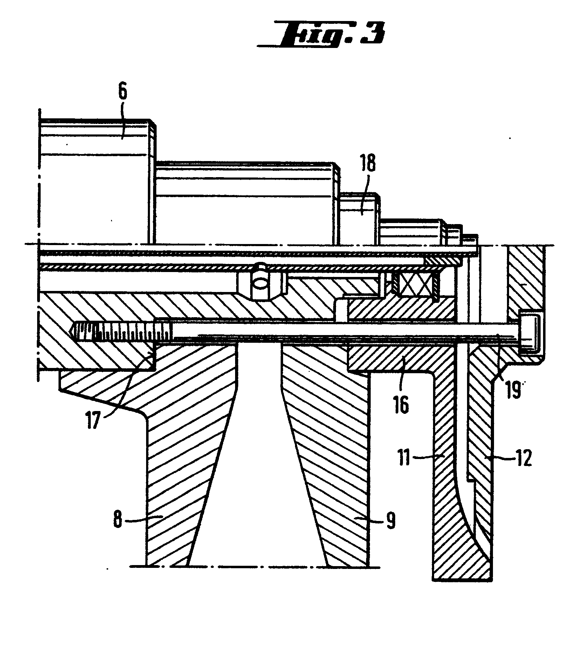

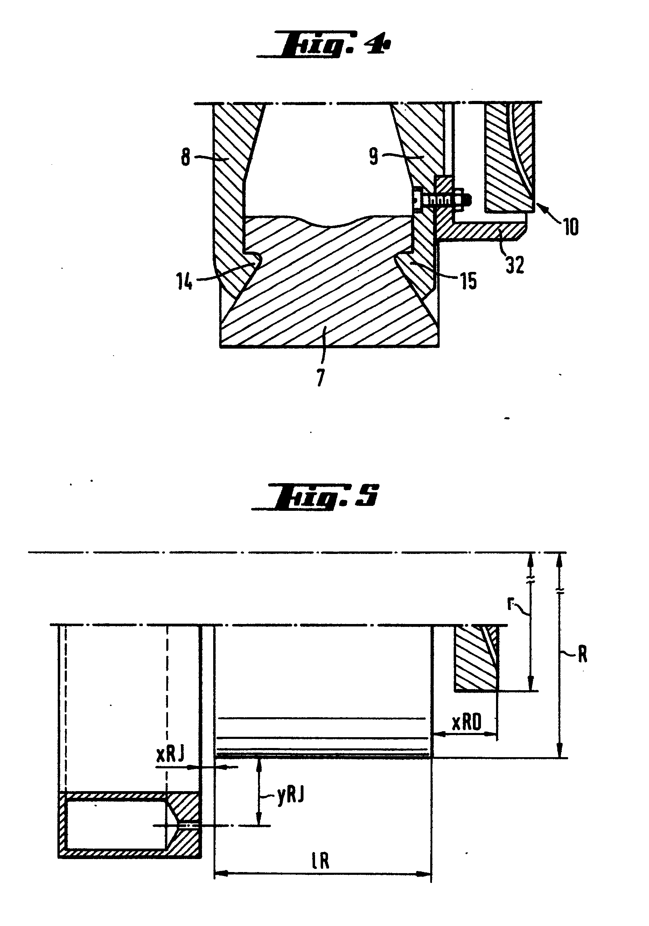

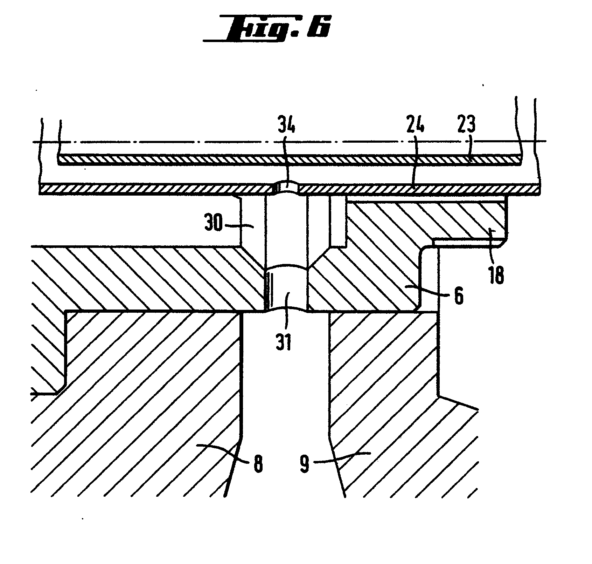

Le détail d'un exemple du montage des éléments sur l'arbre 6 est donné aux figures 3 et 4. Le flaque 8 est amené contre la butée 17 de l'arbre 6. Chaque flasque 8 et 9 comporte à sa périphérie une saillie 14 et 15 qui s'engage dans le logement correspondant de la jante. L'extrémité du moyen 16 du flasque 11 de l'organe de projection vient se loger dans un évidement du flasque 9. Le moyeu 16 est vissé en porte-à-faux à l'extrémité 18 filetée de l'arbre 6, resserrant les deux flasques 8 et 9 sur la jante 7. Le blocage de l'ensemble roue et organe de projection est obtenu au moyen de vis 19 dont l'extrémité vient se loger dans l'arbre 6. Par souci de clarté une seule vis est représentée.

Les dimensions des trous de passage des vis dans les différents flasques et les dimensions des vis sont ajustées de façon, qu'en pratique, les différents fluides mis en oeuvre dans le dispositif ne puissent s'écouler d'un compartiment à un autre. Il n'est cependant pas nécessaire d'assurer l'étanchéité de ces différents compartiments. En effet, le liquide de refroidissement, ou la composition de traitement, après qu'ils aient quitté la canalisation axiale, suivent un acheminement commandé par le mouvement de centrifugation.

Le mode d'assemblage des pièces constituant l'organe de projection et des canalisations d'alimentation en eau de refroidissement et en composition de traitement est illustré à la figure 7. Sur cette figure, pour plus de clarté, les vis de fixation 19 ne sont pas représentées. La fixation du flasque 12 sur le flasque 11 est obtenue par exemple au moyen de vis disposées au niveau du replat 20. Les deux flasques 11 et 12 définissent ainsi un compartiment 21 dans lequel peut circuler la composition de traitement. Ce compartiment s'ouvre vers l'extérieur par la fente continue 22 délimitée par les deux flasques. La composition de traitement s'écoule du compartiment 21 vers la fente 22 par une série de rainures ménagées de façon radiale dans le replat 20.

La dimension et la répartition des rainures mettant en communication le compartiment 21 et la fente 22 sont telles qu'elles permettent une distribution uniforme de la composition sur tout le pourtour de l'organe de projection.

La figure 7 représente une coupe des flasques 11 et 12 au niveau du replat. La coupe de la figure est effectuée au niveau d'une rainure ménagée dans ce replat.

Dans l'axe de l'arbre 6 sont disposées deux canalisations concentriques. La canalisation 23 conduit la composition de traitement jusque dans le compartiment 21. Elle est placée à l'intérieur de la canalisation 24 qui renferme l'eau de refroidissement de la roue. Les deux canalisations sont réunies au moyen d'un bouchon annulaire 25 qui ferme l'extrémité de la canalisation 24. Ce bouchon peut être vissé ou fixé de toute autre façon analogue connue.

Ces deux canalisations sont maintenues en position dans l'axe de l'arbre par un roulement 26 qui repose sur la face interne du moyeu 16. Le roulement 26 est fixé longitudinalement au moyen d'un circlips 27.

Un joint d'étanchéité 28 est maintenu serré contre le roulement 26 par l'épaulement 29 du moyeu 16.

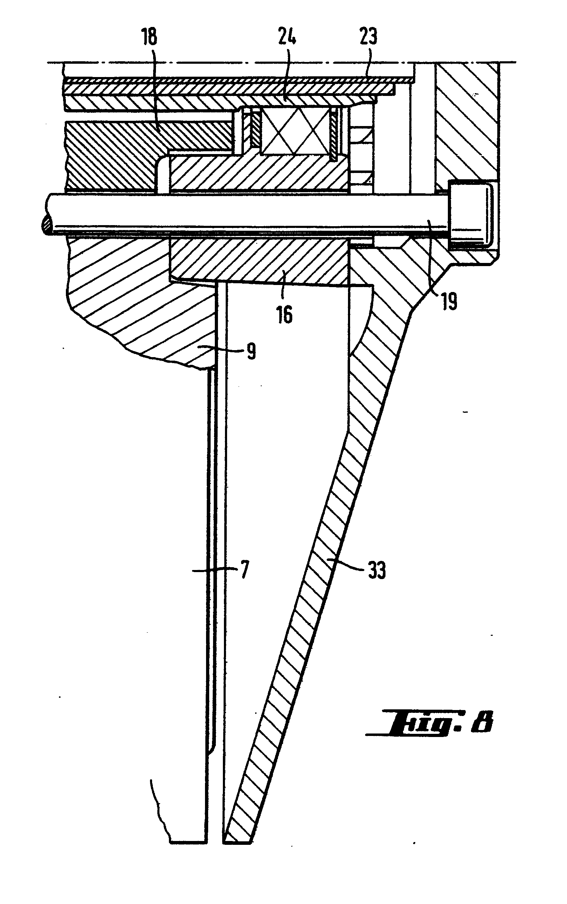

La circulation de l'eau de refroidissement (voir figure 6) s'effectue successivement par la canalisation 24 et par l'intermédiaire d'ouvertures 34 pratiquées dans cette canalisation (une seule ouverture est représentée) à l'intérieur de l'arbre 6 et, plus précisément, dans une gorge 30 ménagée sur la paroi de l'arbre. La gorge 30 a pour but de diriger l'eau vers une ou plusieurs ouvertures 31 situées au fond de cette gorge. Les ouvertures 31 sont disposées de façon que l'eau s'écoule entre les flasques 8 et 9 de la roue.

Comme indiqué à la figure 3, les ouvertures 31 sont décalées par rapport aux trous des vis 19.

Après son contact avec la jante 7 l'eau de refroidissement est évacuée (éventuellement sous forme de vapeur) par des ouvertures, non représentées, disposées sur les côtés de la roue.

Une variante de réalisation de l'organe de projection est schématisée à la figure 8.

Cette variante est sensiblement différente des modes précédents en ce sens que la composition sortant de la canalisation située dans l'axe de l'arbre n'est pas maintenue dans un espace confiné. Elle est appliquée sur un disque 33 de forme conique dont la concavité est tournée vers la roue de fibrage, la composition progresse le long de la face "interne" du disque, à partir du point où elle est appliquée. La conicité maintient la composition plaquée sur le disque jusqu'à la périphérie de celui-ci.

La figure 4 présente un mode de réalisation d'un élément de protection du disque de projection 10. Cet élément est ici une collerette 32. La collerette est fixée sur le flasque 9 de la roue de fibrage. Elle enveloppe partiellement le disque 10. Le rebord du disque d'où se détachent les gouttes de composition bien entendu n'est pas enveloppé.

Sur les figures, la jante de la roue est représentée avec une surface externe plane, pour la commodité du dessin. En fait dans la pratique, pour faciliter "l'accrochage" du matériau à fibrer, cette surface est normalement pourvue de rainures longitudinales.

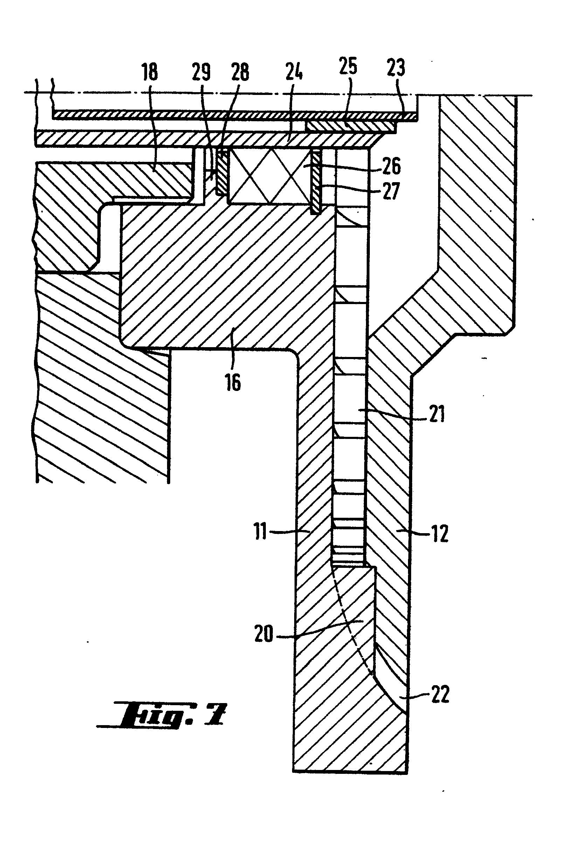

Les mesures utiles pour définir les positions des éléments mis en oeuvre selon les caractéristiques de l'invention sont indiquées à la figure 5. Il s'agit :
- des rayons respectifs de la roue R et de l'organe de projection r,
- de la distance du bord aval de la roue de fibrage au plan de projection de la composition $x_{RD}$,
- de la distance radiale de la surface de la roue à l'axe du jet $y_{RJ}$,
- de la distance de l'orifice du jet au plan du bord amont de la roue $x_{RJ}$,
- de la largeur de la surface de fibrage de la roue $l_R$.

## EXEMPLE

On utilise un appareil de fibrage comprenant trois roues disposées de la façon représentée à la figure 1. Les diamètres des roues et leurs vitesses de rotation sont respectivement :
- roue de distribution : 185 mm, 3000 tours/mn,
- 1ère roue de fibrage : 458 mm, 4200 tours/mn,
- 2ème roue de fibrage : 458 mm, 4600 tours/mn.
La largeur ($l_R$) de la surface des roues de fibrage est de 85 mm (la surface est cannelée longitudinalement).

L'organe de soufflage enveloppe les roues de la façon représentée sur la figure 1. Il comprend une série d'orifices, 405 au total, dont le diamètre d'ouverture est de 2 mm. L'espacement entre deux orifices consécutifs est de 6 mm. Ces orifices sont à une distance radiale de la roue $y_{RJ}$ de 30 mm et axiale $x_{RJ}$ de 10 mm.

La vapeur utilisée est à une pression d'environ $3,5.10^5$ Pa. L'appareil complet souffle une quantité d'environ 2,5 tonnes/heure de vapeur.

La projection de liant est réalisée sur les deux roues de fibrage par des dispositifs tels que représentés à la figure 7. Le diamètre des disques de centrifugation est de 320 mm.

On projette une composition aqueuse de liant à base de résol formo-phénolique.

Le matériau fibré est un verre de mélilite. Le débit d'alimentation est d'environ 3 tonnes/heure.

On forme un matelas de fibre d'épaisseur 50 mm dont la conductivité thermique à 23,9°C est de 38,2 mW/m.°C.

A titre de comparaison on effectue le fibrage dans des conditions analogues en pulvérisant le liant sur les fibres en amont de la roue.

Dans cet essai, la rampe de soufflage ne comporte que 33 orifices dont 16 servent à la pulvérisation du liant. Le diamètre des orifices est de 3 mm. Ils sont disposés à une distance radiale $y_{RJ}$, de 120 à 150 mm.

Les orifices d'amenée du liant ont un diamètre de 2 mm.

La pression de la vapeur dans la rampe est de 3 à 4. $10^5$ Pa. La consommation de vapeur est de 1, 2 tonne/heure.

Les autres conditions sont les mêmes que pour l'exemple selon l'invention.

Le matelas de fibre obtenu présente les mêmes caractéristiques isolantes, mais ses propriétés mécaniques sont moins bonnes, comme l'indique le tableau suivant.

Le produit obtenu selon l'invention présente une amélioration significative de la résistance à la traction, qui caractérisé la "cohésion" du matelas et un moindre taux d'affaissement sous pression.

Par ailleurs, au cours d'essais prolongés, aucun encrassement de l'organe de projection n'est constaté. Ainsi, sur une période continue de fonctionnement de 600 heures, aucun arrêt n'a été nécessaire pour le nettoyage de cet organe de projection.

L'invention permet donc une amélioration des conditions d'exploitation des techniques de fibrage du type considéré tout en maintenant ou même en améliorant les qualités des produits obtenus.

| Propriétés | Exemple comparatif | Selon l'invention | Ecart relatif |
|---|---|---|---|
| Conductivité thermique à 23,9°C mW/m.°C | 38,2 | 38,2 | |
| Résistance à la traction perpendiculaire aux faces daN/dm² | 13,0 | 15,5 | 19 % |
| Taux d'affaissement sous pression 0,4.10⁵ Pa | 4,6 | 4,2 | 10 % |

Le mode de projection de la composition de traitement selon l'invention est remarquable aussi pour sa souplesse d'utilisation. Il permet notamment de projeter des compositions de nature variée avec la même facilité.

Si par exemple les résines formo-phénoliques sont les plus couramment utilisées, d'autres produits liants présentent un intérêt certain. C'est le cas des compositions à base d'huile siccative, notamment l'huile de lin qui présente l'avantage d'être relativement peu coûteuse.

Dans les modes d'application traditionnels, l'utilisation de l'huile de lin ou de compositions à base d'huile de lin, présente certaines difficultés.

La viscosité de l'huile de lin est beaucoup plus élevée que celle des résines formo-phénoliques et dans les produits liés à l'huile de lin la proportion de liant est ordinairement plus faible. Ces deux aspects, quantité plus faible et viscosité plus élevée, font que la tendance au bouchage des orifices de pulvérisation est considérablement accrue, au point que ce type de liant est rarement utilisé.

Dans le mode de projection du liant selon l'invention, les particularités des compositions à base d'huile de lin n'ont soulevé aucun difficulté. La centrifugation s'effectue de façon régulière et les fibres sont enduites de façon très satisfaisante.

A l'occasion des essais des différentes compositions, le caractère auto-nettoyant du dispositif est apparu particulièrement avantageux. Le passage d'une composition à une autre peut être réalisé de façon pratiquement instantanée et sans qu'il soit nécessaire de procéder à une opération de purge préalable.

## Revendications

1.  Procédé de fabrication d'un matelas de fibres minérales dans lequel le matériau destiné à former les fibres est conduit à l'état étirable sur un dispositif de centrifugation comprenant plusieurs roues en rotation rapide, le matériau sous forme d'un filet volumineux s'écoulant vers la surface périphérique d'une première roue (1) où il est essentiellement accéléré et renvoyé sur une deuxième roue (2) tournant en sens inverse de la première, une partie au moins du matériau adhérant à la surface de ladite seconde roue puis s'en détachant sous l'effet de la force centrifuge en formant des fibres, l'excédent éventuel de matériau n'adhérant pas à la roue étant renvoyé sur une éventuelle troisième roue (3) tournant en sens inverse de la seconde et ainsi de suite, un courant gazeux longeant la périphérie de roues et dirigé transversalement à la trajectoire des fibres et entraînant celles-ci vers un organe de réception, une composition liquide de liant étant appliquée sur les fibres au cours de leur trajet avant qu'elles ne soient recueillies sur l'organe de réception, composition qui provient d'un organe rotatif, caractérisé en ce que le courant gazeux présente au niveau des roues de centrifugation une vitesse comprise entre 50 et 180 m/s et la composition liquide est projetée par centrifugation sous forme de gouttes, de dimension moyenne de l'ordre de 250 micromètres, transversalement au courant gazeux portant les fibres, au voisinage immédiat des roues, dans un plan normal à l'axe des roues en une distribution circonférentielle, la projection de la composition liquide étant réalisée à une distance de l'axe de la roue qui est supérieure à 70 % du rayon de la roue et inférieure à ce rayon.

2.  Procédé selon la revendication 1, caractérisé en ce que le rapport de la vitesse du courant gazeux, au niveau de la surface périphérique de la roue, à la vitesse périphérique de la roue est compris entre 1,8 et 0,8.

3.  Procédé selon l'une quelconque des revendications précédentes, caractérisé en ce qu'on règle les vitesses respectives du courant gazeux et de projection des gouttes de façon que la dimension moyenne des gouttelettes après éclatement soit au plus égale au dixième de celle des gouttes projetées par l'organe de centrifugation.

4.  Procédé selon la revendication 1, caractérisé en ce que la vitesse périphérique des roues sur lesquelles le fibrage se développe est comprise entre 60 et 150 m/s.

## Claims

1.  Process for manufacturing a mineral fibre mat in which the material for forming the fibres is conveyed in the drawable state on a centrifuge device comprising a plurality of rapidly rotating wheels, the material in the form of a thick stream flowing towards the peripheral surface of a first wheel (1) where it is substantially accelerated and sent to a second wheel (2) rotating in the opposite direction to the first wheel, at least some of the material adhering to the surface of the said second wheel then being separated therefrom under the effect of centrifugal force to form fibres, any excess material not adhering to the wheel being sent to a possible third wheel (3) rotating in the opposite direction to the second wheel and so on, a gaseous current flowing along the periphery of the wheels being directed transversely to the path of the fibres and carrying the latter along towards a receiving member, a liquid binder composition being applied to the fibres as they travel along their path before being gathered up onto the receiving member, which composition comes from a rotary member, characterized in that, at the centrifuging wheels, the velocity of the gaseous current is between 50 and 180 m/s and the liquid composition is sprayed by centrifuging in the form of drops of an average size of the order 5 to 250 μm transversely to the gaseous current carrying the fibres, in the immediate vicinity of the wheels, in a plane perpendicular to the wheel axis and distributed over the periphery, the liquid composition being sprayed at a distance from the wheel axis which is greater than 70% of the wheel radius and less than this radius.

2. Process according to Claim 1,
characterized in that the ratio of the velocity of the gaseous current at the peripheral surface of the wheel to the peripheral velocity of the wheel is between 1.8 and 0.8.

3. Process according to either of the preceding Claims, characterized in that the respective velocities of the gaseous current and the spray of drops are regulated such that the average size of the droplets after bursting is at most equal to one tenth of that of the drops sprayed by the centrifuge member.

4. Process according to Claim 1,
characterized in that the peripheral velocity of the wheels on which the fibres are drawn is between 60 and 150 m/s.


**Patentansprüche**

1. Verfahren zur Herstellung eines Mineralfaserfilzes, bei dem das zur Bildung der Fasern bestimmte Material in ausziehfähigem Zustand einer Zentrifugiervorrichtung zugeführt wird, die mehrere Räder in schneller Drehung aufweist, wobei das Material in Form eines großvolumigen Primärfadens in Richtung auf die Umfangsfläche eines ersten Rades (1) abfließt, wo es in erster Linie beschleunigt und auf ein zweites Rad (2) weiterbefördert wird, das sich in entgegengesetzter Richtung zum ersten dreht, sich sodann zumindest ein Teil des an der Oberfläche des zweiten Rades anhaftenden Materials unter der Wirkung der Zentrifugalkraft davon löst und Fasern bildet, wobei der eventuelle Materialüberschuß, der nicht an dem Rad anhaftet, auf ein eventuelles drittes Rad (3) weiterbefördert wird, das sich in entgegengesetzter Richtung zum zweiten Rad dreht usw., wobei ein an der Peripherie der Räder entlang verlaufender und quer zur Bahn der Fasern gerichteter Gasstrom diese zu einem Aufnahmeorgan führt und wobei eine flüssige Bindemittelzusammensetzung auf die Fasern auf deren Weg aufgetragen wird, bevor sie auf dem Aufnahmeorgan gesammelt werden, und diese Zusammensetzung aus einem sich drehenden Organ stammt, **dadurch gekennzeichnet, daß** der Gasstrom auf der Höhe der Zentrifugierräder eine Geschwindigkeit zwischen 50 und 180 m/s hat und daß die flüssige Zusammensetzung durch Zentrifugieren in Form von Tropfen mit einer mittleren Größe in der Ordnung von 250 μm in der unmittelbaren Nähe der Räder quer zum die Fasern tragenden Gasstrom in einer zur Achse der Räder senkrechten Ebene in umfangsmäßiger Verteilung weggeschleudert wird, wobei das Abschleudern der flüssigen Zusammensetzung in einer Entfernung von der Radachse stattfindet, die größer als 70% des Radradius, aber kleiner als dieser Radius ist.

2. Verfahren nach Anspruch 1, dadurch gekennzeichnet, daß das Verhältnis der Geschwindigkeit des Gasstromes auf der Höhe der Umfangsfläche des Rades zur Umfangsgeschwindigkeit des Rades zwischen 1,8 und 0,8 liegt.

3. Verfahren nach einem der vorhergehenden Ansprüche, dadurch gekennzeichnet, daß die jeweiligen Geschwindigkeiten des Gasstromes und des Abschleuderns der Tropfen in der Weise reguliert werden, daß die mittlere Größe der Tröpfchen nach dem Zerplatzen höchstens gleich einem Zehntel der Größe der vom Abschleuderorgan abgeschleuderten Tropfen ist.

4. Verfahren nach Anspruch 1, dadurch gekennzeichnet, daß die Umfangsgeschwindigkeit der Räder, auf denen die Faserbildung stattfindet, zwischen 60 und 150 m/s liegt.

Fig.1

Fig. 2

_Fig. 3_

## Fig. 4

## Fig. 5

# Fig. 6

Fig. 7

Fig. 8